# EUROPÄISCHE PATENTANMELDUNG

(11) **EP 1 049 290 A2**
(43) Veröffentlichungstag der Anmeldung: **02.11.2000**
(21) Anmeldenummer: 00109223.8
(22) Anmeldetag: 28.04.2000
(51) Int. Cl.: H04L 12/12, H04L 29/06

(54) **Fernkonfigurierbare Prozessorbaugruppe und Verfahren zu ihrer Konfigurierung**

(30) Priorität: 29.04.1999 DE 19919473
(71) Anmelder: Tenovis GmbH & Co. KG, 60362 Frankfurt (DE)
(72) Erfinder: maier, Klaus, 61231 Bad Nauheim (DE); Weisenburger, Alfons, 63225 Langen (DE)

(57) **Zusammenfassung**

In einem Datenübertragungs- oder -verarbeitungssystem mit einem Paketdatenbus (5) und einer Mehrzahl von angeschlossenen Prozessorbaugruppen, die jeweils wenigstens einen Prozessor (2) und wenigstens eine Schnittstellenschaltung (3) für den Datenaustausch zwischen dem Prozessor und dem Paketdatenbus (5) umfassen, und durch den Prozessor (2) konfigurierbar sind, umfaßt die Schnittstellenschaltung (3) eine Monitorschaltung (12), die auf dem Paketdatenbus (5) auftretende Datenpakete daraufhin auswertet, ob sie für die Prozessorbaugruppe bestimmte Konfigurierungsinformation enthalten und gegebenenfalls eine Konfigurierung gemäß dieser Information vornimmt. Durch die Konfigurierung kann ein Initialisierungsregister (13) der Schnittstellenschaltung (3) gesetzt oder die Prozessorbaugruppe (1) rückgesetzt werden.

## Beschreibung

Die Erfindung betrifft eine Prozessorbaugruppe, die wenigstens einen Prozessor und eine Schnittstellenschaltung für den Datenaustausch zwischen dem Prozessor und einem Paketdatenbus umfaßt, und die in unterschiedlichen Betriebszuständen konfigurierbar ist. Sie betrifft ferner ein Datenübertragungs- oder verarbeitungssystem mit einer Mehrzahl solcher Prozessorbaugruppen, sowie ein Verfahren zum Konfigurieren einer Prozessorbaugruppe.

Bei einer solchen Prozessorbaugruppe kann es sich zum Beispiel um einen einzelnen Rechner innerhalb eines Rechnernetzes, ein Vermittlungsmodul in einer modular aufgebauten Telekornmunikations-Vermittlungsanlage oder dergleichen handeln. Allgemein ist die Erfindung überall dort einsetzbar, wo das Zusammenwirken einer Mehrzahl von Prozessoren in einem komplexen System geregelt werden muß.

Eine Prozessorbaugruppe der oben beschriebenen Art innerhalb einer Telekommunikations-Vermittlungsanlage ist zum Beispiel in DE 43 23 704 A1 beschrieben.

In Datenübertragungs- oder Verarbeitungssystemen, in denen mehrere Prozessoren miteinander kommunizieren müssen, werden im allgemeinen Schnittstellenschaltungen eingesetzt, die jeweils einem Prozessor zugeordnet sind und dem Prozessor die Aufgabe abnehmen, den Datenverkehr auf dem Bus zu überwachen, für den Prozessor bestimmte Daten aus dem auf dem Bus auftretenden Datenstrom zu extrahieren und unter Vermeidung von Konflikten mit anderen Prozessoren Daten auf den Bus auszugeben. Diese Schnittstellenschaltungen beziehungsweise Prozessorbaugruppen, die man als eine funktionelle Einheit aus Prozessor, Schnittstellenschaltung und gegebenenfalls weiteren Peripherie- oder Hilfsschaltungen des Prozessors auffassen kann, sind häufig in einer Mehrzahl unterschiedlicher Betriebszustände konfigurierbar, die sich in diversen Betriebsparametern oder in von der Prozessorbaugruppe ausgeführten Aufgaben unterscheiden können. Bei den bekannten Systemen wird eine solche Konfigurierung unter der Kontrolle des Prozessors vorgenommen, zum Beispiel indem dieser ein Initialisierungsregister der Schnittstellenschaltung oder einer anderen Peripherieschaltung beschreibt.

Die Suche nach den Ursachen von Funktionsstörungen in solchen Systemen ist häufig äußerst mühselig und zeitraubend. Wenn eine Baugruppe unter dem Verdacht steht, nicht ordnungsgemäß zu funktionieren, muß eine Bedienungsperson sie aufsuchen und inspizieren und gegebenenfalls ausschalten oder vom System abkoppeln, um anschließend zu überprüfen, ob das System nun ordnungsgemäß arbeitet. Naturgemäß sind solche Fehler um so häufiger, je komplexer ein System ist. Gleichzeitig steigt auch die Zahl solcher Abkoppelversuche an, die im Störungsfall ausgeführt werden müssen, bis eine defekte Baugruppe ermittelt ist. Wenn eine große Zahl solcher Versuche notwendig ist und dabei womöglich Eingriffe am System an unterschiedlichen Standorten erforderlich sind, kann es sehr lange dauern, bis ein Fehler gefunden ist, mit den entsprechenden Folgen hinsichtlich der Reparatur- oder Wartungskosten des Systems oder der Ausfallzeiten.

Es besteht zwar die Möglichkeit, die Prozessoren jeweils mit Programmen auszustatten, die sie in die Lage versetzen, eine Konfigurierung gemäß Daten vorzunehmen, die über den Bus an sie gesendet werden, doch setzt dies voraus, daß der Prozessor einwandfrei arbeitet und die gewünschte Konfigurierung tatsächlich ausführt. An dieser Gewißheit fehlt es aber gerade dann, wenn ein Fehler im System gefunden werden muß, so daß eine Inspektion der Prozessorbaugruppe an ihrem Einbauort oft nicht vermieden werden kann. Diese Art der Fernkonfigurierung ist also nützlich, um ein funktionierendes System einfach und schnell an sich ändernde Bedürfnisse eines Benutzers anzupassen, für die Fehlersuche und - behebung ist sie jedoch ungeeignet.

### Vorteile der Erfindung

Durch die Erfindung, wie in Anspruch 1 definiert, wird eine Prozessorbaugruppe für ein Datenübertragungs- oder -verarbeitungssystem geschaffen, die eine zuverlässige Konfigurierung auch unter Bedingungen erlaubt, bei denen über das ordnungsgemäße Funktionieren der Prozessorbaugruppe keine Gewißheit besteht. Erfindungsgemäß ist in der Schnittstellenschaltung eine Monitorschaltung vorgesehen, die auf dem Paketdatenbus auftretende Datenpakete auf darin enthaltene Konfigurierungsinformation auswertet und gegebenenfalls eine Konfigurierung gemäß dieser Information vornimmt. Diese Monitorschaltung kann selbst dann noch zuverlässig arbeiten, wenn der Prozessor steht oder defekt ist. Die Monitorschaltung kann direkt am Bus angesiedelt sein und ist so in der Lage, Informationen direkt vom Bus zu lesen, im Gegensatz zum Prozessor, der diese nur über die Schnittstellenschaltung erhält und so im Falle einer Störung oder fehlerhaften Konfigurierung der Schnittstellenschaltung möglicherweise nicht mehr ansprechbar ist. Die Monitorschaltung kann, da sie nur eine einzelne Aufgabe zu erfüllen hat, einfach strukturiert sein und eventuell fest verdrahtet sein und ist deshalb wesentlich unempfindlicher gegen Funktionsstörungen als der Prozessor.

Die Schnittstellenschaltung umfaßt zweckmäßigerweise mindestens ein Initialisierungsregister, das gemäß der Konfigurierungsinformation durch die Monitorschaltung beschreibbar ist. Auf die Möglichkeit eines direkten Beschreibens des Initialisierungsregisters durch den Prozessor kann bei der erfindungsgemäßen Prozessorbaugruppe verzichtet werden.

Des weiteren weist die Schnittstellenschaltung zweckmäßigerweise wenigstens einen Steuerausgang zum Beeinflussen der Arbeitsweise der Prozessorbaugruppe auf, dessen Status gemäß der Konfigurierungsinformation veränderbar ist. Ein solcher Steuerausgang kann zum Beispiel an eine Resetschaltung der Baugruppe angeschlossen sein, um auf den Empfang einer entsprechenden Konfigurierungsinformation ein Reset der Baugruppe auszulösen. Dieses Reset kann die gesamte Baugruppe oder Teile von ihr betreffen. Auf diese Weise ist gewährleistet, daß die Baugruppe unter allen Bedingungen in einen wohldefinierten und bekannten Anfangszustand gebracht werden kann. zweckmäßigerweise führt die Baugruppe auf ein Reset hin eine an sich bekannte Selbsttestprozedur aus. Falls dieser Selbsttest Fehler ergibt und die Baugruppe infolgedessen nicht wieder in Betrieb geht, ist somit zumindest sichergestellt, daß sie deaktiviert ist und den Betrieb des restlichen Systems nicht weiter stört.

Um die Gefahr einer ungewollten Beeinflussung der Prozessorbaugruppe durch auf dem Paketdatenbus fehlerhaft übertragene Datenpakete zu vermeiden, die von der Monitorschaltung fälschlicherweise als Konfigurierungsinformation interpretiert werden könnten, ist vorgesehen, daß die Monitorschaltung zwischen einem aktiven Zustand, in dem sie die Auswertung der Datenpakete vornimmt, und einem passiven zustand umschaltbar ist, in dem sie eine solche Auswertung nicht vornimmt. Solange die Monitorschaltung sich in dem passiven Zustand befindet, ist die Baugruppe somit vor einer ungewollten Konfigurierung geschützt. Eine bevorzugte Möglichkeit, die im Bedarfsfalle ein Umschalten der Monitorschaltung in den aktiven Zustand ermöglicht, ist, daß diese im passiven Zustand die auf dem Paketdatenbus auftretenden Datenpakete daraufhin auswertet, ob sie eine Aktivierungsinformation enthalten, und gegebenenfalls für eine zum Empfangen wenigstens eines nachfolgenden Datenpakets ausreichende Zeitspanne in den aktiven Zustand umschaltet. Für die Rückkehr der Monitorschaltung in den passiven Zustand kann ein Zeitgeber genutzt werden, der nach Ablauf einer vorgegebenen Zeit im aktiven Zustand die Monitorschaltung in den passiven Zustand umschaltet, unabhängig davon, ob im aktiven Zustand ein Datenpaket empfangen wurde oder nicht.

Um Konfigurierungsinformationen enthaltende Pakete von Nutzdatenpaketen unterscheiden zu können, ist es zweckmäßig, einen Header des entsprechenden Pakets mit einem Unterscheidungsmerkmal zu versehen. Deshalb umfaßt die Schnittstellenschaltung Mittel zum Ausgeben eines Pakets mit einem Header auf den Paketdatenbus, das als Konfigurierungsinformation anhand des Zustands von wenigstens einem Bit im Header des Pakets gekennzeichnet ist, und die Monitorschaltung weist dementsprechend Mittel zum Unterscheiden von auf dem Paketdatenbus auftretenden Paketen mit Konfigurierungsinformation von Nutzdatenpaketen anhand des Zustands des wenigstens einen Bits auf. Dabei kann der Inhalt eines Pakets einschließlich des Headers durch den Prozessor vorgegeben sein.

Die Schnittstellenschaltung verfügt ferner über Mittel zum Auswerten von Adreßinformation im Header von auf dem Paketdatenbus auftretenden Paketen, und der Monitorschaltung sind Mittel zum Auswerten der Adreßinformation zugeordnet. Dabei können die Mittel zum Auswerten der Adreßinformation von der Monitorschaltung und den die Paketempfangsfunktion erfüllenden Teilen der Schnittstellenschaltung gemeinsam genutzt werden.

Die Adreßinformation kann eine logische oder physikalische Adresse einer beliebigen Prozessorbaugruppe einschließlich derjenigen, die das betreffende Datenpaket sendet, eine vorgegebene Adreßinformation mit der Bedeutung, daß das betreffende Paket für alle Baugruppen bestimmt (als Broadcast-Zeichen bezeichnet) oder eine andere vorgegebene Adreßinformation sein, die angibt, daß die betreffende Baugruppe das Paket an sich selbst sendet (nachfolgend als Selbst-Zeichen bezeichnet).

Um zu verhindern, daß ein mit dem Selbst-Zeichen versehenes Datenpaket von allen Prozessorbaugruppen des Systems als von ihnen selbst gesendet angesehen und dementsprechend ausgewertet wird, ist zweckmäßigerweise die Monitorschaltung an einen Ausgang der Schnittstellenschaltung für ein Signal angeschlossen, das anzeigt, ob die Schnittstellenschaltung ein Datenpaket auf dem Paketdatenbus ausgibt. Die Monitorschaltung erfaßt ein Paket mit Konfigurierungsinformation nur dann als für ihre Baugruppe bestimmt, wenn dieser Ausgang anzeigt, daß die Schnittstellenschaltung gerade ein Paket auf dem Paketdatenbus ausgibt und diesem Paket das Selbst-Zeichen zugeordnet ist.

Ein bequem und effektiv zu wartendes beziehungsweise im Falle einer Störung zu reparierendes Datenübertragungs- oder verarbeitungssystem umfaßt eine Mehrzahl von an einen Paketdatenbus angeschlossenen Prozessorbaugruppen der oben beschriebenen Art.

Mehrere solche Systeme können an einen gemeinsamen übergeordneten Bus jeweils über eine übergeordnete Schnittstellenschaltung für den Datenaustausch zwischen dem Paketdatenbus und dem übergeordneten Bus angeschlossen sein und so eine hierarchische Datenübertragungs- oder -verarbeitungsanordnung bilden.

Es können auch mehrere Systeme in einer baum- oder netzartigen Struktur verknüpft sein, indem jeweils ein System anstelle einer Prozessorbaugruppe über eine Schnittstelle an den Bus eines anderen Systems angeschlossen ist.

In Analogie zur Schnittstellenschaltung einer Prozessorbaugruppe umfaßt auch die übergeordnete Schnittstellenschaltung zweckmäßigerweise eine Monitorschaltung, die auf dem übergeordneten Bus auftretende Datenpakete daraufhin auswertet, ob sie für das System, dem die übergeordnete Schnittstellenschaltung angehört, bestimmte Konfigurierungsinformation enthält, und gegebenenfalls eine Konfigurierung gemäß dieser Konfigurierungsinformation vornimmt.

Die Erfindung betrifft ferner ein Verfahren zum Konfigurieren einer Prozessorbaugruppe, insbesondere einer Prozessorbaugruppe der oben beschriebenen Art, mit den Schritten:
- Erzeugen eines Konfigurierungsinformation enthaltenden Pakets und Übertragen des Pakets auf den Paketdatenbus und
- Empfangen und Auswerten des Pakets und Ausführen eines Konfigurierungsprozesses durch die Schnittstelle.

Diese Auswertung und Ausführung erfolgt direkt und ohne Beteiligung des Prozessors. Der Konfigurierungsprozeß kann insbesondere einen oder mehrere der folgenden Prozesse umfassen:
- Setzen eines Initialisierungsregisters der Schnittstellenschaltung;
- Festlegen einer der Schnittstellenschaltung zugeordneten physikalischen und/oder logischen Adresse;
- Setzen oder Rücksetzen einer Signalleitung der Baugruppe sowie, eventuell über eine solche Signalleitung, teilweises oder vollständiges Rücksetzen der Baugruppe.

Weitere Merkmale und Vorteile der Erfindung ergeben sich aus der nachfolgenden Beschreibung von Ausführungsbeispielen.

### Figuren

- Figur 1: zeigt ein Blockdiagrarnm einer erfindungsgemäßen Prozessorbaugruppe;
- Figur 2: zeigt eine hierarchische Datenübertragungs- oder -verarbeitungsanordnung;
- Figur 3: zeigt eine übergeordnete Schnittstelle, die in der Anordnung aus Figur 2 ein Bindeglied zwischen verschiedenen Datenbussen bildet; und
- Figur 4: zeigt ein Beispiel für ein mögliches Format eines Datenpakets.

### Beschreibung der Ausführungsbeispiele

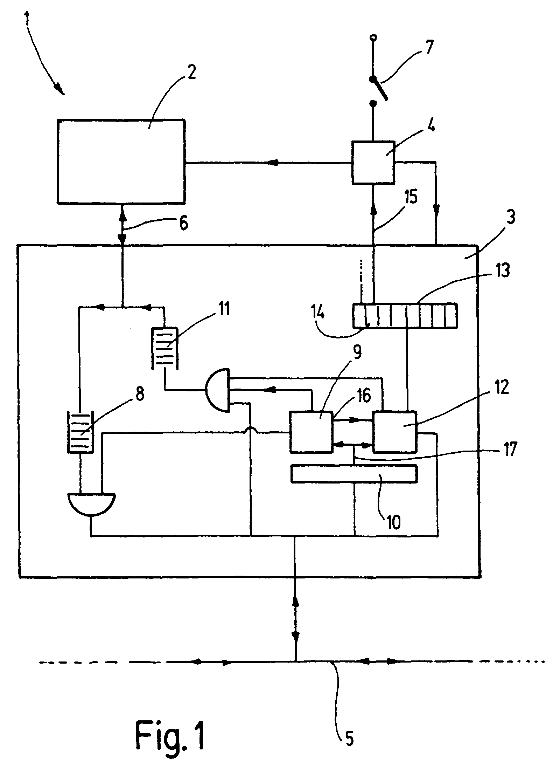

Die in Figur 1 schematisch dargestellte Prozessorbaugruppe 1 umfaßt einen Prozessor 2 und eine Schnittstellenschaltung 3 für den Datenaustausch zwischen dem Prozessor 2 und einem Paketdatenbus 5. Der Prozessor 2 und die Schnittstellenschaltung 3 kommunizieren über einen internen Bus 6, an den auch weitere Peripherieschaltungen oder -geräte angeschlossen sein können, die nicht Gegenstand der Erfindung sind und hier nicht dargestellt sind.

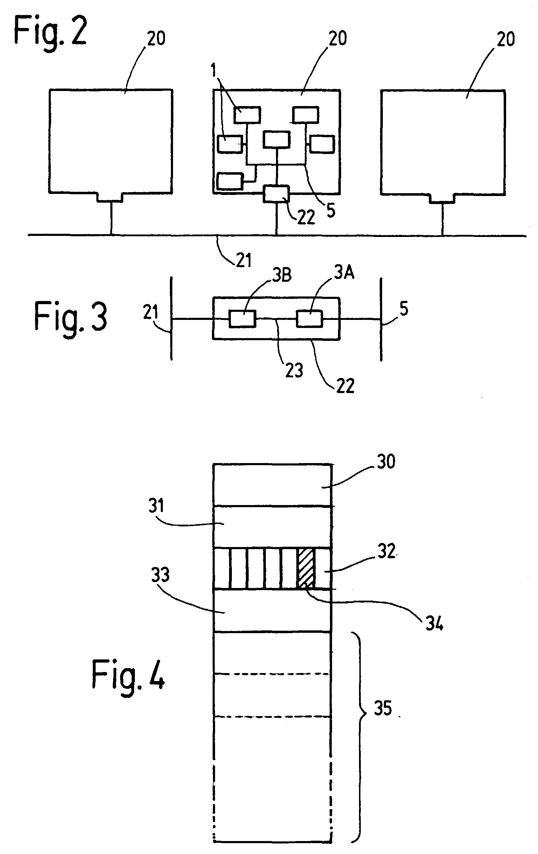

Der Prozessor 2 liefert an die Schnittstellenschaltung 3 Daten in Form von Paketen, die in einem Header Adreßinformation und in nachfolgend mit Bezug auf Figur 4 genauer beschriebener Weise, eine Kennzeichnung als Nutzdatenpakete oder Pakete mit Konfigurierungsinformation beinhalten. Eine Steuerschaltung 9 verwaltet die Ausgabe von Datenpaketen aus dem Sendepuffer 8 auf den Bus 5 sowie den Empfang von Nutzdatenpaketen von dem Bus 5. An einem Ausgang 16 liefert die Steuerschaltung ein Signal, das angibt, ob sie gerade dabei ist, ein Paket auf den Paketdatenbus 5 auszugeben oder nicht.

Ein Adreßdecoder 10 ist unmittelbar an den Paketdatenbus 5 angeschlossen. Er überwacht die auf dem Paketdatenbus 5 auftretenden Datenpakete und vergleicht die den Paketen zugeordneten Empfängeradressen mit den Adressen der Schnittstellenschaltung 3. Diese kann mehrere Adressen haben, zum einen eine physikalische Adresse, die durch den Ort, an dem sie in einem Datenübertragungs- oder - verarbeitungssystem eingebaut ist, eindeutig vorgegeben ist, sowie eine oder gar mehrere logische Adressen, die willkürlich einstellbar sind. Das Einstellen einer logischen Adresse kann durch einen Konfigurierungsprozeß erfolgen.

Wenn die Adresse des Pakets mit einer der Adressen der Prozessorbaugruppe 1 übereinstimmt, gibt der Adreßdecoder 10 ein Bereitschaftssignal auf einer Leitung 17 an die Steuerschaltung 9, um diese zu informieren, daß das sich anschließende Datenpaket an die Prozessorbaugruppe 1 gerichtet ist und in einen Empfangspuffer 11 der Schnittstellenschaltung 3 übertragen werden muß. Wenn das betreffende Datenpaket von der Schnittstellenschaltung 3 selbst gesendet wird, übernimmt die Steuerschaltung 9 es nicht in den Empfangspuffer 11. Das gleiche Bereitschaftssignal geht an eine Monitorschaltung 12, die ebenfalls direkt an den Paketdatenbus 5 angeschlossen ist und die darauf auftretenden Pakete auf das

Auftreten eines Zeichens überwacht, welches gewöhnliche Nutzdatenpakete von Datenpaketen unterscheidet, die eine Konfigurierungsinformation enthalten. Wenn das Paket eine Konfigurierungsinformation enthält, unterbindet die Monitorschaltung 12 dessen Übernahme in den Empfangspuffer 11, so daß es nicht an den Prozessor 2 übermittelt werden kann. Stattdessen wertet die Monitorschaltung 12 das Datenpaket selbst aus und überschreibt in Abhängigkeit vom Inhalt dieses Pakets ein Initialisierungsregister 13 der Schnittstellenschaltung.

Die Monitorschaltung 12 ist an den Ausgang 16 der Steuerschaltung 9 angeschlossen und ist dadurch in der Lage zu erkennen, ob ein zu einem gegebenen Zeitpunkt auf dem Bus 5 gesendetes Paket von der Schnittstellenschaltung 3 stammt, der die Monitorschaltung 12 angehört.

Das Initialisierungsregister 13 enthält eine Mehrzahl unterschiedlicher Speicherfelder, zum Beispiel für die physikalische Adresse und/oder die - möglicherweise mehreren - logischen Adressen der Prozessorbaugruppe 1, für Parameter der Übertragung auf den Bus, die von der Steuerschaltung 9 verwendet werden können, um das Senden und den Empfang von Daten auf dem Bus zu verwalten, etc.

Das Initialisierungsregister 13 enthält ferner eine Anzahl von Statusregisterbits, darunter ein Bit 14, dessen Ausgang mit dem Triggereingang eines Resetcontrollers 4 verbunden ist. Wenn die Monitorschaltung in Reaktion auf eine entsprechende Konfigurierungsinformation dieses Bit 14 setzt, wird der Resetcontroller über einen Resetausgang 15 aktiviert. Das gleiche kann eine Bedienungsperson durch Drücken einer an sich bekannten Reset-Taste 7 der Prozessorbaugruppe bewirken. Der Resetcontroller 4 gibt daraufhin in einer vorgegebenen Reihenfolge Resetbefehle an den Prozessor 2 sowie an die Schnittstellenschaltung 3 aus. Diese Resetbefehle haben zur Folge, daß der Prozessor 2 zurückgesetzt wird und anschließend eine Selbsttestroutine der Prozessorbaugruppe 1 abarbeitet, in der die Funktionsfähigkeit der einzelnen Bausteine wie etwa des Prozessors 2 selbst, der Schnittstellenschaltung 3 oder der nicht dargestellten Peripherieschaltungen überprüft wird. Falls irgendeiner dieser Selbsttests auf einen Defekt hinweist, hält der Prozessor 2 an, so daß die Prozessorbaugruppe 1 keine Datenblöcke mehr auf den Paketdatenbus 5 ausgibt. Falls von der Baugruppe gesendete, defekte Datenblöcke Ursache für eine Störung des Systems gewesen sind, kann nun der Rest des Systems ordnungsgemäß weiterarbeiten. Falls keine Störung erkannt wird, wird ein definierter Anfangsbetriebszustand der Prozessorbaugruppe erreicht, von dem aus durch weitere Konfigurierungsinformationen ein gewünschter Betriebszustand wiederhergestellt werden kann.

Es kann ferner ein spezielles Statusregisterbit im Initialisierungsregister 13 vorgesehen werden, von dessen Zustand abhängt, ob die Prozessorbaugruppe Datenpakete auf dem Bus 5 senden kann oder nicht. Wenn die Prozessorbaugruppe 1 über den Bus 5 mit weiteren Prozessorbaugruppen zu einem System verbunden ist, kann ein Benutzer des Systems an einer beliebigen dieser anderen Prozessorbaugruppen ein Paket mit Konfigurierungsinformation auf dem Bus 5 senden lassen, das das Setzen dieses Statusregisterbits veranlaßt und so die Prozessorbaugruppe 1 vom Schreibzugriff auf den Paketdatenbus 5 ausschließen. So kann der Benutzer von einer beliebigen Stelle des Systems aus dessen einzelne Baugruppen deaktivieren, um zu ermitteln, ob sie Ursache einer eventuellen Störung des Systems ist, ohne diese Baugruppen aufsuchen zu müssen.

Figur 2 zeigt eine hierarchisch gegliederte Datenverarbeitungs- oder -übertragungsanordnung mit einer Mehrzahl von Datenübertragungs- oder - verarbeitungssystem 20, die an einen gemeinsamen übergeordneten Bus 21 angeschlossen sind. Dabei kann es sich bei den Systemen 20 zum Beispiel um Telekommunikations-Vermittlungsanlagen oder Rechnernetze innerhalb eines Gebäudes handeln. Bei einem der Systeme 20 ist sein innerer Aufbau dargestellt. Es umfaßt eine Mehrzahl von Prozessorbaugruppen 1, wie oben mit Bezug auf Figur 1 beschrieben, die über einen Paketdatenbus 5 miteinander und mit einer übergeordneten Schnittstelle 22 verbunden sind. Die übergeordnete Schnittstelle 22 ist als Bindeglied zwischen dem Paketdatenbus 5 innerhalb eines Systems 20 und dem übergeordneten Bus 21 angeordnet.

Figur 3 zeigt schematisch den Aufbau einer übergeordneten Schnittstelle 22 zwischen einem Paketdatenbus 5 und einem übergeordneten Bus 21. Die übergeordnete Schnittstelle 22 umfaßt zwei Schnittstellenschaltungen 3A,3B, deren Aufbau identisch ist und jeweils weitgehend der bereits beschriebenen Schnittstellenschaltung 3 entspricht. Jede Schnittstellenschaltung 3A,3B umfaßt jeweils die oben beschriebenen Komponenten 8 bis 14.

Die Schnittstellenschaltung 3A ist in der gleichen Weise wie eine Schnittstellenschaltung 3 einer Prozessorbaugruppe 1 an den Paketdatenbus 5 angeschlossen, und die Schnittstellenschaltung 3B in analoger Weise an den übergeordneten Bus 21. Die zwei Schnittstellenschaltungen 3A,3B sind über eine Leitung 23 beliebiger Art, zum Beispiel eine Richtfunkstrecke, ein Glasfaserkabel oder dergleichen verbunden, die je nach Einsatzumständen des Systems eine sehr große, im Prinzip unbegrenzte Länge haben kann.

Durch Versenden von Konfigurierungsinformation enthaltenden Datenpaketen zwischen verschiedenen Systemen 20 über den übergeordneten Bus 21 kann eine Fernwartung der gesamten Anordnung von einem beliebigen Ort aus durchgeführt werden, völlig unabhängig davon, wie weit die Baugruppen 1 der einzelnen Systeme 20 beziehungsweise die Systeme 20 voneinander entfernt sind.

Figur 4 zeigt das Format eines Datenpaketes, so wie es von einer Prozessorbaugruppe wie der oben beschriebenen Prozessorbaugruppe 1 erzeugt wird und auf den Paketdatenbus 5 beziehungsweise dem übergeordneten Bus 21 auftritt. Die einzelnen Datenwörter des Pakets haben jeweils eine Breite von 8 Bit. Das Paket besitzt einen Header im Umfang von vier Datenwörtern 30 bis 33. Das erste Datenwort 30 beinhaltet eine Systemadresse. Diese Adresse kann logisch oder physikalisch sein, und sie kann eines der Systeme 20 der Anordnung aus Figur 2 oder auch den übergeordneten Datenbus 21 selbst bezeichnen. Für physikalische Adressen sind die Zahlenwerte 1 bis 126 reserviert, für logische Adressen die Zahlenwerte 128 bis 255. Die Zahlenwerte 0 und 127 haben Sonderbedeutungen: Eine Systemadresse mit dem Wert 0 kennzeichnet ein Paket, das an sämtliche Systeme 20 einer Anordnung gerichtet ist, ein sogenanntes Broadcast-Paket. Der Zahlenwert 127 kennzeichnet ein Paket, das an dasjenige System 20 gerichtet ist, in dem es erzeugt wurde. Dieser Zahlenwert hat die Funktion eines Selbst-Zeichens, wie eingangs erläutert.

Wenn das Datenwort 30 die Adresse eines Systems 20 angibt, dann bezeichnet das Datenwort 31 die Adresse einer Prozessorbaugruppe 1 oder der direkt an den Paketdatenbus 5 angeschlossenen Schnittstellenschaltung 3A der übergeordneten Schnittstelle 22 innerhalb dieses Systems 20. Wenn das Datenwort 30 hingegen die Adresse des übergeordneten Busses 21 enthält, so bezeichnet das Datenwort 31 die Adresse einer an den übergeordneten Bus 21 angeschlossenen Schnittstelle 3B. Unabhängig davon, welche dieser beiden Alternativen im Einzelfall zutrifft, wird der Inhalt des Datenworts 31 im folgenden auch als Baugruppenadresse bezeichnet.

Die Zahlenwerte 1 bis 126 der Baugruppenadresse sind physikalischen Adressen und die Zahlenwerte 128 bis 255 logischen Adressen zugeordnet. 0 bezeichnet ein an alle Baugruppen 1 eines Systems 20 beziehungsweise Schnittstellen 3B gerichtetes Broadcast-Paket und 127 ein Paket, das eine Baugruppe an sich selbst sendet. Auch bei der Baugruppenadresse hat der Wert 127 die Funktion eines Selbst-Zeichens.

Das nächstfolgende Datenwort 32 des Pakets enthält eine Mehrzahl von Steuerbits, von denen für die vorliegende Erfindung nur eines, als Konfigurierungsbit 34 bezeichnet, bedeutsam ist. Sein Status wird vom Prozessor beim Erzeugen des zugeordneten Pakets definiert und gibt an, ob es sich bei dem nachfolgenden Paket um Nutzdaten oder um Konfigurierungsinformation handelt. Dieses Bit wird von der Monitorschaltung 12 ausgewertet.

Das letzte Datenwort 33 des Headers gibt die Länge des nachfolgenden Datenpakets 35 in "Containern" an, wobei ein Container jeweils acht Byte entspricht.

Wenn ein Datenpaket in einem System erzeugt worden und auf dessen Paketdatenbus 5 ausgegeben worden ist, werden diese beiden Adreß-Datenwörter 30,31 von jedem an dem Paketdatenbus 5 angeschlossenen Adreßdecoder 10 einer Schnittstellenschaltung 3 oder der Schnittstellenschaltung 3A der übergeordneten Schnittstelle 22 ausgewertet. Dabei akzeptiert der Adreßdecoder 10 einer Schnittstellenschaltung 3 ein Paket als für ihn bestimmt, wenn erstens das Datenwort 30 den Wert 0 hat, das Paket also an alle Systeme gerichtet ist, oder einen Wert hat, der einer logischen oder physikalischen Adresse des Systems entspricht, dem die Schnittstellenschaltung 3 des Adreßdecoders 10 angehört, und zweitens wenn a) das Datenwort 31 den Wert 0 oder eine logische oder physikalische Adresse der Prozessorbaugruppe 1 enthält, der die Schnittstellenschaltung 3 angehört, oder b) wenn das Datenwort 31 das Selbst-Zeichen 127 enthält und gleichzeitig die Schnittstellenschaltung 3 selbst ein Paket auf den Paketdatenbus 5 sendet. Da zu jedem Zeitpunkt nur eine der an den Paketdatenbus 5 angeschlossenen Prozessorbaugruppen 1 senden kann, wird im Fall b) ein Datenpaket also nur von derjenigen Schnittstellenschaltung 3 akzeptiert, die zu der sendenden Prozessorbaugruppe gehört. Auf diese Weise kann der Prozessor einer solchen Baugruppe Konfigurierungsinformationen an seine eigene Schnittstelle senden und diese dadurch konfigurieren, ohne dazu seine eigene Adresse innerhalb des Systems beziehungsweise der Anordnung kennen zu müssen. Dies ist für ein einfaches Starten des Systems oder einzelner, nachträglich in das System eingefügter Prozessorbaugruppen sowie für das Wiederhochfahren des Systems oder einzelner Prozessorbaugruppen nach einem Reset vorteilhaft.

Dieses Verfahren der Konfigurierung durch Senden eines Pakets mit Konfigurierungsinformation auf den Bus und Auswerten der Konfigurierungsinformation durch die Schnittstelle der eigenen Baugruppe hat ferner den Vorteil, daß es in gleicher Weise, nur durch eine Anpassung der Adreßinformation der die Konfigurierungsinformation enthaltenden Datenpakete, auch zur Konfigurierung fremder Prozessorbaugruppen einsetzbar ist. Dies führt zu einer Verringerung des Programmieraufwands im Vergleich zu herkömmlichen Systemen, bei denen ein Prozessor zum Konfigurieren seiner eigenen Baugruppe zwar direkt auf die darin enthaltenen Peripherieschaltungen oder -geräte zugreifen kann, zum Konfigurieren einer fremden Baugruppe aber darauf angewiesen ist, mit deren Prozessor einen Dialog zu führen, um diesen dazu zu veranlassen, die gewünschten Konfigurierungen vorzunehmen. Für diesen Dialog wird selbstverständlich eine völlig andere Software benötigt als für die Konfigurierung der Bausteine der eigenen Baugruppe.

Die Auswertung von Adreßinformation eines Konfigurierungsinformation enthaltenden und durch das Konfigurierungsbit 34 entsprechend gekennzeichneten Datenpakets durch die Schnittstellenschaltungen 3A,3B der übergeordneten Schnittstelle 22 wird nachfolgend anhand von zwei Tabellen dargestellt.

**Tabelle 1**

| Schnittstellenschaltung 3A | | | |
|---|---|---|---|
| Systemadresse | Baugruppenadresse | konfigurieren | weiterleiten |
| alle | | n | j |
| eigenes System | alle | n | n |
| | eigene Bgr. | j | n |
| | fremde Bgr. | n | n |
| | selbst | j | n |
| selbst | alle | n | n |
| | eigene Bgr. | j | n |
| | fremde Bgr. | n | n |
| | selbst | j | n |
| am übergeord. Bus | | n | j |
| fremdes System | | n | j |

Diese Tabelle betrifft den Empfang von Datenpaketen mit Konfigurierungsinformation auf dem Paketdatenbus 5. Falls in einem solchen Paket die Systemadresse des Datenworts 30 "alle" ist, wird das Paket von der Schnittstellenschaltung 3A wie ein Nutzdatenpaket an die Schnittstellenschaltung 3B weitergeleitet. Die Schnittstellenschaltung 3A wertet das Paket aber nicht zu ihrer eigenen Konfigurierung aus. Diese Regelung ist aus Sicherheitsgründen getroffen; es soll nicht möglich sein, mit einem einzigen Datenpaket mehr als eine Schnittstellenschaltung zu konfigurieren, da andernfalls ein Paket mit fehlerhafter Konfigurierungsinformation zu einem totalen Ausfall der gesamten Anordnung führen könnte.

Wenn die Systemadresse des Datenworts 30 das System 20 bezeichnet, dem die Schnittstellenschaltung 3A angehört, oder das Selbst-Zeichen ist, wird das Paket nicht weitergeleitet. Ob es zur Konfigurierung der Schnittstellenschaltung 3A verwendet wird, hängt von der im Datenwort 31 enthaltenen Baugruppenadresse ab.

Falls die Baugruppenadresse "alle" spezifiziert, wird das Paket ebenfalls aus Sicherheitsgründen nicht zur Konfigurierung verwendet und nicht weitergeleitet. Das gleiche geschieht, wenn eine fremde Baugruppe adressiert ist, das Paket also nicht für die Schnittstellenschaltung 3A bestimmt ist.

Wenn die Baugruppenadresse die der Schnittstellenschaltung 3A innerhalb des Systems ist, ist das Paket offensichtlich zu ihrer Konfigurierung bestimmt und wird dazu verwendet.

Der Fall, daß die Baugruppenadresse das Selbst-Zeichen ist, kann sich ergeben, wenn zum Beispiel die Schnittstellenschaltung 3A durch ein aus einem fremden System stammendes Paket konfiguriert werden soll. Die das Paket sendende Baugruppe im fremden System kennt zwar die Systemadresse, möglicherweise aber nicht die Adresse der Schnittstelle 3A innerhalb dieses Systems. Ein von ihr mit dem Selbst-Zeichen als Baugruppenadresse gesendetes Paket erreicht das Zielsystem, wird dort von der Schnittstellenschaltung 3A auf den Bus 5 ausgegeben, und von der Monitorschaltung 12 der Schnittstellenschaltung 3A anhand des Selbst-Zeichens und der Tatsache, daß die Schnittstellenschaltung 3A sendet, als für sie bestimmt erkannt und zur Konfigurierung verwendet.

Die Systemadresse kann ferner die der an den übergeordneten Bus 21 angeschlossenen Schnittstellenschaltungen 3B oder eines fremden Systems sein. Ein solches Paket wird von der Schnittstellenschaltung 3A, da nicht für sie bestimmt, nicht ausgewertet. Es wird in Richtung auf den übergeordneten Bus 21 weitergeleitet.

In Abweichung von der Tabelle 1 können Pakete mit eigener oder fremder Systemadresse und Baugruppenadresse "selbst" von der Verwendung zur Konfigurierung der Schnittstellenschaltung 3A ausgeschlossen sein. In diesem Fall ist die Konfigurierung der Schnittstellenschaltung 3A eines fremden Systems nur möglich, wenn dessen (physikalische oder logische) Baugruppenadresse in dem Datenwort 31 angegeben ist.

Gemäß einer bevorzugten Variante ist vorgesehen, daß Konfigurierungsinformation enthaltende Pakete mit einer logischen System- oder Baugruppenadresse von den adressierten Schnittstellenschaltungen nicht ausgewertet werden. Der Grund dafür ist, daß logische Adressen im Gegensatz zu physikalischen mehrfach vergeben sein können und eine logisch adressierte Konfigurierungsinformation - sofern diese Art der Adressierung zugelassen würde - zu einer Änderung der Konfigurierung einer unbestimmten Zahl von Schnittstellenschaltungen führen könnte. Da die Konfigurierung die logische Adresse einer Schnittstellenschaltung verändern kann, ist nicht gewährleistet, daß ein solcher Konfigurierungsvorgang zuverlässig rückgängig gemacht werden kann. Eine Adressierung mittels physikalischer Adressen oder Selbst-Zeichen hingegen kann immer nur zur Änderung der Konfigurierung einer einzelnen Schnittstellenschaltung führen. Eine solche Änderung ist zuverlässig umkehrbar.

**Tabelle 2**

| Schnittstellenschaltung 3B | | | |
|---|---|---|---|
| Systemadresse | Baugruppenadresse | konfigurieren | weiterleiten |
| alle | | n | j |
| eigen | alle, fremd | n | n |
| | selbst,eigen | j | n |
| selbst | alle, fremd | n | n |
| | selbst,eigen | j | n |
| angeschl. System | | n | j |
| sonstiges System | | n | n |

Beim Empfang eines Datenpakets mit Konfigurierungsinformation auf dem übergeordneten Datenbus 21 durch die Schnittstellenschaltung 3B sind die in Tabelle 2 dargestellten fünf Fälle zu unterscheiden: Die Systemadresse kann "alle", oder die eigene Adresse (das heißt die Adresse des übergeordneten Busses 21), das Selbst-Zeichen, die Adresse des Systems 20, das über die betreffende Schnittstellenschaltung 3B an den übergeordneten Bus 21 angeschlossen ist, oder ein sonstiges System 20 bezeichnen. Wenn die Systemadresse das angeschlossene System bezeichnet, wird das betreffende Paket weitergeleitet, wenn sie ein fremdes System bezeichnet, nicht. Ansonsten wird die Verarbeitung der Pakete von der Schnittstellenschaltung 3B in gleicher Weise gehandhabt wie von der Schnittstellenschaltung 3A.

Bei einem System der oben beschriebenen Art besteht die geringe, aber nicht gänzlich auszuschließende Wahrscheinlichkeit, daß infolge eines Übertragungsfehlers oder einer sporadischen Störung in einer der Schnittstellenschaltungen ein Datenpaket fälschlicherweise als Konfigurierungsinformation interpretiert und das Statusregister 13 einer Schnittstellenschaltung dementsprechend mit falschen Werten überschrieben wird.

Diese Gefahr läßt sich dadurch reduzieren, daß zur Erkennung von Konfigurierungsinformation enthaltenden Datenpaketen nicht ein einzelnes Konfigurierungsbit 34 benutzt wird, sondern indem für eine größere Zahl von Bits ein Wert vorgegeben wird, den diese haben müssen, damit ein Paket von einer Monitorschaltung 12 als Konfigurierungsinformation erkannt wird.

Eine andere, bevorzugte Lösung dieses Problems ist, die Monitorschaltung 12 zwischen einem aktiven und einem passiven Zustand umschaltbar auszubilden, wobei allein im aktiven Zustand eine Überwachung der auf dem angeschlossenen Bus auftretenden Datenpakete darauf erfolgt, ob das Konfigurierungsbit 34 gesetzt ist oder nicht.

Um eine Monitorschaltung einer Schnittstellenschaltung in den aktiven Zustand umzuschalten, wird an die Schnittstellenschaltung ein spezielles Datenpaket, als Aktivierungspaket bezeichnet, gesendet, das in dem die Länge des Datenpakets spezifizierenden Datenwort 33 den Minimalwert 1 enthält, also lediglich aus dem Header und einem Container zu 8 Byte besteht. Derartig kurze Datenpakete haben für den normalen Nutzdatenverkehr nur geringen Wert und können deshalb ohne merklichen Verlust an Übertragungsbandbreite ausschließlich zum Aktivieren der Monitorschaltungen verwendet werden.

Jeder Monitorschaltung ist ein Zeitgeber zugeordnet, der mit dem Übergang der Monitorschaltung in den aktiven Zustand durch Empfang eines solchen Datenpakets zu laufen beginnt und nach Ablauf einer vorgegebenen Zeitspanne die Monitorschaltung in den passiven Zustand zurückschaltet. Diese Zeitdauer ist zweckmäßigerweise entsprechend der Zeitspanne gewählt, die für die Übertragung eines Datenpakets mit Konfigurierungsinformation auf dem Bus 5 benötigt wird. Um eine Schnittstellenschaltung zu konfigurieren, ist es bei dieser Ausgestaltung also notwendig, nacheinander ein Aktivierungspaket und ein Paket mit Konfigurierungsinformation an die gleiche Schnittstellenschaltung zu senden. Wenn das Paket mit Konfigurierungsinformation nicht oder nicht rechtzeitig empfangen wird, kehrt die Schnittstellenschaltung in den passiven Zustand zurück, ohne eine Konfigurierung vorgenommen zu haben. Die Wahrscheinlichkeit, daß rein zufällig aufgrund einer Fehlfunktion nacheinander ein Aktivierungspaket und ein Paket mit Konfigurierungsinformation gesendet werden, ist dermaßen gering, daß sie unter praktischen Gesichtspunkten vernachlässigt werden kann.

Zahlreiche Varianten der Erfindung sind möglich, insbesondere kann das erfindungsgemäße Konfigurierungsverfahren in einem System, das nicht an einen übergeordneten Bus angeschlossen ist, also nicht hierarchisch gegliedert ist, oder - in einer hierarchisch gegliederten Anordnung - jeweils auf einzelne Systeme dieser Anordnung beschränkt eingesetzt werden. In diesem Fall ist das Datenwort 30 mit der Systemadresse im Header der Datenpakete nicht erforderlich. Genauso ist es möglich, Anordnungen mit mehr als zwei Hierarchiestufen zu schaffen, wobei entsprechend der Zahl der Stufen eine größere Zahl von Datenwörtern im Header für die Adressierung einzusetzen ist.

## Patentansprüche

1. Prozessorbaugruppe (1) für ein Datenübertragungs- oder -verarbeitungssystem (20), das einen Paketdatenbus (5) und eine Mehrzahl von an den Paketdatenbus (5) angeschlossenen Prozessorbaugruppen (1) umfaßt, wobei die Prozessorbaugruppe (1) wenigstens einen Prozessor (2) und wenigstens eine Schnittstellenschaltung (3) für den Datenaustausch zwischen dem Prozessor (2) und dem Paketdatenbus (5) umfaßt und durch den Prozessor (2) konfigurierbar ist, **dadurch gekennzeichnet,** daß die Schnittstellenschaltung (3) eine Monitorschaltung (12) umfaßt, die auf dem Paketdatenbus (5) auftretende Datenpakete daraufhin auswertet, ob sie für die Prozessorbaugruppe (1) bestimmte Konfigurierungsinformation enthalten und gegebenenfalls eine Konfigurierung gemäß der Konfigurierungsinformation vornimmt.

2. Prozessorbaugruppe nach Anspruch 1, **dadurch gekennzeichnet,** daß die Schnittstellenschaltung (3) wenigstens ein Initialisierungsregister (13) umfaßt, das gemäß der Konfigurierungsinformation beschreibbar ist.

3. Prozessorbaugruppe nach Anspruch 1 oder 2, **dadurch gekennzeichnet,** daß die Schnittstellenschaltung (3) wenigstens einen Steuerausgang (15) zum Beeinflussen der Arbeitsweise der Prozessorbaugruppe (1) aufweist, dessen Status gemäß der Konfigurierungsinformation veränderbar ist.

4. Prozessorbaugruppe nach Anspruch 3, **dadurch gekennzeichnet,** daß einer der Steuerausgänge (15) an eine Resetschaltung (4) der Prozessorbaugruppe (1) angeschlossen ist, um ein Reset der Prozessorbaugruppe (1) auszulösen.

5. Prozessorbaugruppe nach einem der vorhergehenden Ansprüche, **dadurch gekennzeichnet,** daß die Monitorschaltung (12) zwischen einem aktiven Zustand, in dem sie die Auswertung der Datenpakete vornimmt, und einem passiven Zustand umschaltbar ist, in dem sie eine solche Auswertung nicht vornimmt.

6. Prozessorbaugruppe nach Anspruch 5, **dadurch gekennzeichnet,** daß die Monitorschaltung im passiven Zustand die auf dem Paketdatenbus (5) auftretenden Datenpakete darauf hin auswertet, ob sie eine Aktivierungsinformation enthalten, und gegebenenfalls für eine zum Empfangen wenigstens eines nachfolgenden Datenpakets ausreichende Zeitspanne in den aktiven Zustand umschaltet.

7. Prozessorbaugruppe nach Anspruch 6, **dadurch gekennzeichnet,** daß der Monitorschaltung (12) ein Zeitgeber zugeordnet ist, der nach Ablauf einer vorgegebenen Zeit im aktiven Zustand die Monitorschaltung (12) in den passiven Zustand umschaltet.

8. Prozessorbaugruppe nach einem der vorhergehenden Ansprüche, **dadurch gekennzeichnet,** daß die Schnittstellenschaltung (3) Mittel zum Ausgeben eines Datenpakets mit einem Header auf den Paketdatenbus, das als Konfigurierungsinformation anhand des Zustands von wenigstens einem Bit (34) im Header (30 bis 33) des Pakets gekennzeichnet ist, umfaßt, und daß die Monitorschaltung (12) Mittel zum Unterscheiden von auf dem Paketdatenbus (5) auftretenden Paketen mit Konfigurierungsinformation von Nutzdatenpaketen anhand des Zustands des wenigstens einen Bits (34) umfaßt.

9. Prozessorbaugruppe nach einem der vorhergehenden Ansprüche, **dadurch gekennzeichnet,** daß der Schnittstellenschaltung und der Monitorschaltung (12) Mittel zum Auswerten (10) der Adreßinformation von auf dem Paketdatenbus (5) auftretenden Datenpaketen zugeordnet sind.

10. Prozessorbaugruppe nach Anspruch 9, **dadurch gekennzeichnet,** daß die Schnittstellenschaltung (3) einen Ausgang (16) für ein Signal aufweist, das anzeigt, ob sie ein Paket auf dem Paketdatenbus (5) ausgibt, und daß die Monitorschaltung (12) an den Ausgang (16) angeschlossen ist.

11. Prozessorbaugruppe nach Anspruch 10, **dadurch gekennzeichnet,** daß die Monitorschaltung (3) ein Paket mit Konfigurierungsinformation als für ihre Baugruppe (1) bestimmt erfaßt, wenn dem Paket eine vorgegebene Adreßinformation zugeordnet ist und der Ausgang (16) anzeigt, daß die Schnittstellenschaltung (3) ein Paket auf dem Paketdatenbus (5) ausgibt.

12. Datenübertragungs- oder -verarbeitungssystem (20) mit einem Paketdatenbus (5) und einer Mehrzahl an einen Paketdatenbus (5) angeschlossenen Prozessorbaugruppen (1), **dadurch gekennzeichnet,** daß es wenigstens eine Prozessorbaugruppe (1) nach einem der vorhergehenden Ansprüche umfaßt.

13. Hierarchische Datenübertragungs- oder verarbeitungsanordnung, **dadurch gekennzeichnet,** daß sie eine Mehrzahl von Systemen (20) nach Anspruch 12 umfaßt, die an einen gemeinsamen übergeordneten Bus (21) angeschlossen sind, wobei jedem System eine übergeordnete Schnittstelle (22) für den Datenaustausch zwischen dem System (20) und dem übergeordneten Bus (21) zugeordnet ist, die durch das System (20) konfigurierbar ist.

14. Anordnung nach Anspruch 13, **dadurch gekennzeichnet,** daß die übergeordnete Schnittstellenschaltung (22) eine Monitorschaltung (12) umfaßt, die auf dem übergeordneten Bus (21) auftretende Datenpakete darauf hin auswertet, ob sie für das System (20) bestimmte Konfigurierungsinformation enthalten, und gegebenenfalls eine Konfigurierung gemäß der Konfigurierungsinformation veranlaßt.

15. Verfahren zum Konfigurieren einer Prozessorbaugruppe, die wenigstens einen Prozessor (1) und eine Schnittstellenschaltung (3) für den Datenaustausch zwischen dem Prozessor (1) und einem Paketdatenbus (5) umfaßt, mit den Schritten:
- Erzeugen eines Konfigurierungsinformation enthaltenden Pakets und Übertragen des Pakets auf den Paketdatenbus (5);
- Empfangen und Auswerten des Pakets und Ausführen eines Konfigurierungsprozesses durch die Schnittstelle (3)

16. Verfahren nach Anspruch 15, bei dem das Paket vom Prozessor (2) der Prozessorbaugruppe (1) selbst erzeugt und über die Schnittstellenschaltung (3) auf dem Paketdatenbus (5) gesendet wird.

17. Verfahren nach Anspruch 15, bei dem das Paket von einer zweiten Prozessorbaugruppe (1) erzeugt und auf dem Paketdatenbus (5) gesendet wird.

18. Verfahren nach einem der Ansprüche 15 bis 17, bei dem der Konfigurierungsprozeß einen oder mehrere der folgenden Prozesse umfaßt:
- Setzen eines Initialisierungsregisters (13) der Schnittstellenschaltung (3),
- Festlegen einer der Schnittstellenschaltung (3) zugeordneten physikalischen und/oder logischen Adresse,
- Setzen oder Rücksetzen einer Signalleitung der Prozessorbaugruppe (1),
- Rücksetzen der Prozessorbaugruppe (1).
